# EUROPÄISCHE PATENTSCHRIFT

(11) **EP 2 925 025 B1**
(45) Veröffentlichungstag und Bekanntmachung des Hinweises auf die Patenterteilung: **23.03.2016**
(21) Anmeldenummer: 14162150.8
(22) Anmeldetag: 27.03.2014
(51) Int. Cl.: H04W 4/00, G06F 9/44, H04W 4/04, H04W 84/18

(54) **Computerimplementiertes Verfahren zur Implementierung einer Car2x-Anwendung**
Computer implemented method for implementing a Car2x application
Procédé implémenté sur un ordinateur destiné à implémenter une application Car2x

(43) Veröffentlichungstag der Anmeldung: 30.09.2015
(73) Patentinhaber: dSPACE digital signal processing and control engineering GmbH, 33102 Paderborn (DE)
(72) Erfinder: Hordys, Gregor, 33175 Bad Lippspringe (DE); Rolfsmeier, Andre, 33175 Bad Lippspringe (DE)
(74) Vertreter: Gesthuysen Patent- und Rechtsanwälte

(56) Entgegenhaltungen:
- US-A1- 2007 294 074
- US-A1- 2009 282 384
- US-A1- 2013 282 238
- US-B1- 8 015 543
- FESTAG A ET AL: "CAR-2-X Communication SDK - A Software Toolkit for Rapid Application Development and Experimentations", COMMUNICATIONS WORKSHOPS, 2009. ICC WORKSHOPS 2009. IEEE INTERNATIONAL CONFERENCE ON, IEEE, PISCATAWAY, NJ, USA, 14. Juni 2009 (2009-06-14), Seiten 1-5, XP031515510, ISBN: 978-1-4244-3437-4

## Beschreibung

Die Erfindung betrifft ein computerimplementiertes Verfahren zur Implementierung einer Car2x-Anwendung auf einer Zielhardware mit einem Funkadapter, wobei die Car2x-Anwendung mit einer graphischen Modellierungsumgebung in Form eines Blockschaltbildes modelliert wird. Verschiedene Blöcke zur Verwendung in einer graphischen Modellierungsumgebung, mit denen eine Car2x-Anwendung modelliert und implementiert werden kann, werden beschrieben.

Die Erfindung entstammt dem Umfeld der Steuergeräteentwicklung, sie betrifft hier weniger die hardwaremäßige Entwicklung eines Steuergeräts, sondern vielmehr den Test einer im weitesten Sinne regelungstechnischen Funktionalität auf einem Steuergerät. Der Begriff "regelungstechnische Funktionalität" ist nicht eng im systemtheoretischen Sinne zu verstehen, gemeint ist jegliche gezielte Einflussnahme auf einen mit dem Steuergerät verbundenen technischen Prozess.

Die damit verbundene Entwicklung durchläuft verschiedene Phasen, die Teil des sogenannten V-Modells sind. Üblicherweise wird die gewünschte regelungstechnische Funktionalität zunächst abstrakt im Rahmen von Offline-Simulationen - keine Verbindung zum realen Prozess, keine Echtzeitanforderung - durch ein mathematisches Modell abgebildet, wobei üblicherweise mit Blockschaltbildern sowohl der regelungs- und steuerungstechnische Aspekt wie auch der zu beeinflussende technisch-physikalische Prozess mathematisch nachgebildet und mit Hilfe von numerischen Verfahren simuliert werden.

In einem weiteren Schritt wird die regelungstechnische Funktionalität in Programmcode umgesetzt und auf einer Zielhardware implementiert, die sich von dem später zum Einsatz kommenden Seriensteuergerät meist erheblich unterscheidet. Die Zielhardware ist üblicherweise leistungsfähiger als Seriensteuergeräte, so dass beim Test der zu implementierenden regelungstechnischen Funktionalität jedenfalls sichergestellt ist, dass die Hardware kein limitierender Faktor im Aufbau ist. Die so instrumentierte Zielhardware wird jedenfalls im Zusammenhang mit dem zu beeinflussenden technischen Prozess getestet.

Sobald die Serien-Zielhardware, also das Seriensteuergerät, zur Verfügung steht, wird der zu implementierende Regelungsalgorithmus für diese Zielhardware erzeugt, wobei das Seriensteuergerät dann zunächst nicht im Zusammenhang mit dem echten physikalischen Prozess getestet wird, sondern mit einer simulierten Prozessumgebung im Rahmen eines Hardware-in-the-Loop-Test (HIL-Test). Nach erfolgreich absolviertem HIL-Test wird die Zielhardware in Form des Seriensteuergeräts im echten physikalischen Prozess, vorliegend also im Kraftfahrzeug, getestet, wobei hier ggf. noch Abstimmungen in der Parametrierung erfolgen.

Wichtig für sämtliche Entwicklungsschritte ist, dass der aus dem Blockschaltbild bekannte abstrakte Regelungsvorgang nicht mehr manuell in Programmcode übersetzt wird, sondern dass diese Übertragung durch einen automatisierten Codegenerierungsprozess aus dem Blockschaltbild heraus erfolgt. So werden die fehlerträchtige manuelle Übertragung vermieden und schnelle Testzyklen mit variierender regelungstechnischer Funktionalität ermöglicht.

Mit den heute gängigen graphischen Modellierungs- und Simulationsumgebungen lassen sich durch Verwendung der zur Verfügung stehenden Elementaroperationen (Grundrechenarten, Differential- und Integraloperationen, Bitbeeinflussung, Look-Up-Tables etc.) praktisch beliebige Funktionalitäten nachbilden, wie beispielsweise auch die Buskommunikation zwischen Steuergeräten.

In der Steuergeräteentwicklung ist es ganz allgemein von Interesse, auch solche Technologien in einer graphischen Modellierungsumgebung abbilden zu können, die noch nicht zum etablierten Stand der Technik gehören. Eine solch neue, aber noch nicht etablierte Technologie ist die Car2x-Technologie, unter der die Kommunikation eines Fahrzeugs mit seiner Umgebung verstanden wird. Dabei kann es sich um die Kommunikation mit anderen umgebenden Fahrzeugen handeln (Car2Car) oder auch um die Kommunikation mit immobilen Kommunikationspartnern (Car2Infrastructure).

Aus dem Aufsatz von Festag et al.: "CAR-2-X Communication SDK - A Software Toolkit for Rapid Application Development and Experimentations", Communications Workshops, 2009, ist eine Entwicklungsumgebung bekannt, die Basisfunktionalitäten von Car2x-Anwendungen bereitstellt in Form von Programmbibliotheken, mit denen sich beispielsweise der Car2x Protokoll-Stack implementieren lässt. Der Entwickler arbeitet hier jedoch noch in einer hochsprachlichen textuellen Programmierumgebung.

Die Abbildung einer solchen Car2x-Kommunikation mit den Elementaroperationen einer graphischen Modellierungsumgebung in jedem Einzelfall der Modellierung einer Car2x-Anwendung ist beliebig kompliziert und aufwendig, so dass der vorliegenden Erfindung die Aufgabe zugrunde liegt, ein computerimplementiertes Verfahren zur Implementierung einer Car2x-Anwendung auf einer Zielhardware anzubieten, bei dem der Implementierungsaufwand reduziert ist.

Die zuvor hergeleitete Aufgabe ist zunächst gelöst durch ein computerimplementiertes Verfahren zur Implementierung einer Car2x-Anwendung auf einer Zielhardware mit einem Funkadapter, wobei die Car2x-Anwendung mit einer graphischen Modellierungsumgebung in Form eines Blockschaltbildes modelliert wird und das Blockschaltbild in ein auf der Zielhardware ausführbares Car2x-Programm übersetzt und das Car2x-Programm auf die Zielhardware übertragen und dort ausgeführt wird, wobei zur Erstellung des Blockschaltbildes ein Car2x-Kommunikationsblock eingesetzt wird, der wenigstens eine Funkadapterschnittstelle aufweist, mittels derer Daten zwischen dem Funkadapter und dem Car2x-Kommunikationsblock ausgetauscht werden.

Ergebnis des erfindungsgemäßen Verfahrens ist also eine Zielhardware, auf der eine Car2x-Anwendung ausgeführt wird, wobei der erfindungsgemäß eingesetzte Car2x-Kommunikationsblock automatisch dafür sorgt, dass die einen Funkadapter umfassende Zielhardware den Funkadapter ohne weiteres verwenden kann, insbesondere ohne hier ein Ansprechen des Funkadapters mit ins Detail gehenden Elementaroperationen selbst modellieren und ansprechen zu müssen; dadurch wird eine erhebliche Vereinfachung für die Realisierung von Car2x-Anwendungen erzielt.

Die Zielhardware kann den Funkadapter in einer integrierten hardwaremäßigen Lösung selbst umfassen, die Zielhardware kann aber mit einem Funkadapter auch über eine separat realisierte hardwaremäßige Schnittstelle verbunden sein. Wenn hier davon die Rede ist, dass das mit der graphischen Modellierungsumgebung erstellte Blockschaltbild in ein auf der Zielhardware ausführbares Car2x-Programm übersetzt wird, dann kann es sich bei diesem Programm um ein auf einem Prozessor/Mikrocontroller ausführbares Programm handeln, es kann sich aber auch um eine Hardwarebeschreibung handeln, mit der einer Schaltkreisstruktur durch "feste Verdrahtung" die genwünschte Funktionalität aufgegeben wird. Über die Funkadapterschnittstelle lassen sich Daten in Richtung auf den Funkadapter übertragen (senden), es können genauso gut von dem Funkadapter Daten in Richtung auf die übrige Zielhardware gerichtet werden (empfangen).

Eine vorteilhafte Ausgestaltung des Verfahrens sieht vor, dass der Car2x-Kommunikationsblock über wenigstens eine Applikationsschnittstelle mit einer Applikationseinheit Daten austauscht, wobei die Applikationseinheit insbesondere Teil des Blockschaltbildes sein kann. Dadurch ist es möglich, dass der Verwender des Verfahrens in der Applikationseinheit eine eigene Funktionalität realisieren kann, die im Zusammenhang mit der Car2x-Kommunikation steht. Es kann so auf mit dem Car2x-Kommunikationsblock empfangene Daten im Rahmen der Applikation reagiert werden, genauso können im Rahmen der Applikation erzielte Ergebnisse über den Car2x-Kommunikationsblock nach außen mitgeteilt werden. Die Applikationseinheit kann also auch einen sendenden und einen empfangenen Anteil haben.

In einem bevorzugten Ausführungsbeispiel handelt es sich bei den über die Applikationsschnittstelle zu der Applikationseinheit übertragenen Daten beispielsweise um Informationen über ein sich näherndes Fahrzeug, über ein sich in einem bestimmten Bereich befindliches Einsatzfahrzeug - beispielsweise ein solches mit hoheitlicher Funktion -, den Einsatzstatus eines Fahrzeugeszum Beispiel "aktivierte Sirene", "Unfallstelle absichernd" usw. Die über die Applikationsschnittstelle übertragenen Daten können codiert sein, beispielsweise über eine Mehrzahl an digitalen Signalleitungen oder auch über ein n-Bit-Datenwort, wobei die Bedeutung des codierten Nachrichteninhalts z. B. über ein Look-Up-Table ermittelt wird.

Gemäß einer Weiterentwicklung des erfindungsgemäßen Verfahrens ist vorgesehen, dass dem Car2x-Kommunikationsblock über wenigstens eine Senderatenschnittstelle die Rate vorgegeben wird, mit der dem Funkadapter Daten übermittelt werden. Mit dieser Möglichkeit kann einfach die Funktionalität implementiert werden, dass bei zu hoher Fahrzeug- und damit Informationsdichte eine Überflutung der drahtlosen Kommunikationskanäle resultiert. Wenn der Car2x-Kommunikationsblock beispielsweise eine Standard-Senderate von 10 Hz aufweist, kann ihm über die Senderatenschnittstelle vorgegeben werden, dass in der jetzigen Verkehrssituation nur mit einer reduzierten Senderate zu arbeiten ist, beispielsweise mit 5 Hz, 2 Hz oder auch nur 1 Hz. Dabei ist es unerheblich, woher das Signal zur Reduzierung der Senderate stammt, das Signal kann beispielsweise aus dem Funkadapter selbst stammen, wenn dieser ein Bandbreitenproblem erkennt.

In einer weiteren Ausgestaltung des erfindungsgemäßen Verfahrens ist vorgesehen, dass dem Car2x-Kommunikationsblock über wenigstens eine Protokollschnittstelle Protokollbeschreibungsdaten übermittelt werden. Damit ist es möglich, dem Car2x-Kommunikationsblock an beliebige Protokolle anzupassen bzw. mit beliebigen Protokollen auszustatten. Vorzugsweise werden die Protokollbeschreibungsdaten im Format Abstract Syntax Notation 1 (ASN.1) zur Verfügung gestellt. Durch die Protokollbeschreibungsdaten wird die Kommunikationsfunktionalität des Car2x-Kommunikationsblocks zumindest teilweise definiert; es könnte beispielsweise auch eine feste, unveränderliche Kommunikationsfunktionalität in dem Car2x-Kommunikationsblock implementiert sein, zu der die über die Protokollbeschreibungsdaten definierte Funktionalität hinzutritt.

In einem weiteren bevorzugten Ausführungsbeispiel des Verfahrens wird in dem Car2x-Kommunikationsblock eine Datenkomprimierung der zu sendenden Daten vorgenommen, vorzugsweise auch eine Dekomprimierung empfangener komprimierter Daten. Insbesondere wir bei ASN.1-konformen Daten eine Komprimierung durch Packed Encoding Rules vorgenommen.

Vorzugsweise wird wenigstens eine der zuvor angesprochenen Schnittstellen, also der Funkadapterschnittstelle, Applikationsschnittstelle, Senderatenschnittstelle und Protokollschnittstelle, als Port des Car2x-Kommunikationsblocks realisiert, so dass die Schnittstellen mit den üblichen Mitteln blockbasierter graphischer Modellierungsumgebungen gehandhabt werden können und eine Nutzung der entsprechenden Schnittstelle schon aus dem Blockschaltbild heraus offenkundig ist, indem beispielsweise eine Signallinie an den entsprechenden Port angeschlossen wird.

In einer weiteren Ausgestaltung des Verfahrens ist vorgesehen, dass die Funkadapterschnittstelle des Car2x-Kommunikationsprotokolls auf einer Protokollebene oberhalb der Transportschicht des OSI-Referenzmodells realisiert wird, also in der Sitzungsschicht, der Darstellungsschicht oder der Anwendungsschicht. In diesem Fall sind in dem Funkadapter die hardwarenäheren Schichten des OSI-Referenzmodells realisiert, beginnend bei der Transportschicht.

In einer weiteren Ausgestaltung des Verfahrens ist vorgesehen, dass die Kommunikation zwischen dem Car2x-Kommunikationsblock und dem Funkadapter über das Netzwerkprotokoll UDP modelliert wird und entsprechend durch das resultierende Car2x-Programm zwischen Zielhardware und realem Funkadapter eine Kommunikation über das Netzwerkprotokoll UDP realisiert wird.

In einer besonders vorteilhaften Ausgestaltung des Verfahrens versendet der Car2x-Kommunikationsblock über die Funkadapterschnittstelle zyklisch Daten, insbesondere in Form von Cooperative Awareness Messages, es kann sich hier um Eigenfahrzeugdaten handeln, die den Status und Bewegungsinformationen des Fahrzeugs umfassen. Diese gesendeten Eigenfahrzeugdaten können beispielsweise von anderen Fahrzeugen empfangen werden, um ein Bewegungsprofil der sie umgebenden Verkehrsteilnehmer zu erstellen. Damit ein Bewegungsprofil auch zwischen Fahrzeugen erstellt werden kann, die eine große Relativgeschwindigkeit zueinander haben, ist es vorteilhaft, eine nicht zu große Zykluszeit zu wählen, eine Senderate von 10 Hz - also eine Zykluszeit von 100 ms - kann in vielen Fällen geeignet sein.

Alternativ oder ergänzend ist in dem vorgeschlagenen Verfahren vorgesehen, dass der Car2x-Kommunikationsblock über die Funkadapterschnittstelle ereignisgetrieben Daten versendet, insbesondere in Form von Decentralized Environmental Notification Messages (DENM-Messages). Durch ereignisgetriebene Datenübermittlung können zielgerichtet Informationen mitgeteilt werden, die im normalen und fehlerfreien Verkehrsbetrieb nicht von Interesse sind. Ein auslösendes Ereignis könnte beispielsweise eine Vollbremsung oder ein substantieller Fahrzeugdefekt sein.

Der Implementierungsaufwand für eine Car2x-Anwendung wird weiterhin dadurch erzielt, dass das zur Erstellung des Blockschaltbildes ein Car2x-Bewegungsprofilblock eingesetzt wird, der wenigstens eine Bewegungsdatenschnittstelle aufweist, mittels derer Bewegungsdaten aus empfangenen Daten von Fremdfahrzeugen bereitgestellt werden, insbesondere wobei zu den Bewegungsdaten wenigstens eine der Informationen Position, Geschwindigkeit, Beschleunigung und Bewegungsrichtung gehört. In dem Bewegungsprofilblock können selbstverständlich auch noch weitere Informationen hinterlegt werden, die nicht originär mit Position oder Bewegung eines Fremdfahrzeugs zu tun haben, gleichwohl aber das Fahrzeug betreffen, z. B. Statusinformationen wie die Absicherung einer Unfallstelle durch ein Fremdfahrzeug oder ähnliches.

Über den Car2x-Bewegungsprofilblock kann innerhalb der Modellierungsumgebung auf sehr einfache Art und Weise auf die Bewegungsdaten von umgebenden Fremdfahrzeugen zugegriffen werden, so dass eine erhebliche Erleichterung der Implementierung von Car2x-Anwendungen erzielt wird.

In einer weiteren Ausgestaltung des erfindungsgemäßen Verfahrens wird eine Erleichterung in der Implementierung von Car2x-Anwendungen dadurch erzielt, dass zur Erstellung des Blockschaltbildes ein Car2x-Eigenbewegungsprofilblock eingesetzt wird, der wenigstens eine Bewegungsdatenschnittstelle aufweist, mittels derer Bewegungsdaten des eigenen Fahrzeugs bereitgestellt werden, insbesondere wobei zu den Bewegungsdaten wenigstens eine der Informationen Position, Geschwindigkeit, Beschleunigung und Bewegungsrichtung gehört. Derart kann innerhalb des Modells sehr einfach auf die Bewegungsdaten des eigenen Fahrzeugs zugegriffen werden und die Daten beispielsweise durch Übermittlung an den Car2x-Kommunikationsblock auch an andere Verkehrsteilnehmer übermittelt werden.

Eine noch weitergehende Vereinfachung bei der Realisierung von Car2x-Anwendungen besteht darin, dass zur Erstellung des Blockschaltbildes ein Car2x-Eigenfahrzeugdatenbusblock eingesetzt wird, der wenigstens eine Datenbusdatenschnittstelle aufweist, mittels derer Daten des Datenbusses des eigenen Fahrzeugs bereitgestellt werden, insbesondere dem Car2x-Kommunikationsblock bereitgestellt werden, wobei es sich bei dem Datenbus insbesondere um einen Datenbus zur Vernetzung der Fahrzeugsteuergeräte handelt, insbesondere wobei der Datenbus nach einem der Standards CAN, TTCAN oder FlexRay arbeitet. Durch diese Maßnahme kann durch den Car2x-Eigenfahrzeugdatenbusblock auf die interne Steuergerätekommunikation des eigenen Fahrzeugs zugegriffen werden, beispielsweise von der Applikationseinheit, die der Verwender des Verfahrens erstellt hat, um seine Custom-Funktionalität zu implementieren. Der erfindungsgemäße Einsatz des Car2x-Eigenfahrzeugsdatenbusblocks ermöglicht einen direkten und tiefen Zugriff auf die Kommunikation der Fahrzeugelektronik.

Das erfindungsgemäße Verfahren verwendet verschiedene Car2x-Blöcke, mit denen sich eine Car2x-Anwendung mit einer graphischen Modellierungsumgebung in Form eines Blockschaltbildes beschreiben lassen, nämlich durch einen Car2x-Kommunikationsblock, einen Car2x-Bewegungsprofilblock, einen Car2x-Eigenbewegungsprofilblock und einen Car2x-Eigenfahrzeugdatenbusblock.

Im Einzelnen gibt es eine Vielzahl von Möglichkeiten, das erfindungsgemäße computerimplementierte Verfahren und die genannten Car2x-Blöcke für eine graphische Modellierungsumgebung auszugestalten und weiterzubilden. Dazu wird verwiesen einerseits auf die dem Patentanspruch 1 nachgeordneten Patentansprüche sowie auf die folgende Beschreibung von Ausführungsbeispielen in Verbindung mit der Zeichnung. In der Zeichnung zeigen
- Fig. 1: eine schematische Darstellung eines computerimplementierten Verfahrens zur Implementierung einer Car2x-Anwendung auf einer Zielhardware mit einem Funkadapter,
- Fig. 2: schematisch ein Blockschaltbild einer graphischen Modellierungsumgebung mit einem Car2x-Kommunikationsblock, einem Funkadapter und einer Applikationseinheit innerhalb des Blockschaltbildes,
- Fig. 3: ein Blockschaltbild wie in Fig. 2 mit einem Car2x-Kommunikationsblock mit Senderatenschnittstelle,
- Fig. 4: ein Blockschaltbild wie in den vorherigen Figuren mit einem Car2x-Kommunikationsblock mit Protokollschnittstelle,
- Fig. 5: ein Blockschaltbild zur Modellierung einer Car2x-Anwendung mit einem Bewegungsprofilblock,
- Fig. 6: ein Blockschaltbild zur Modellierung einer Car2x-Anwendung mit einem Eigenbewegungsprofilblock und
- Fig. 7: ein Blockschaltbild zur Modellierung einer Car2x-Anwendung mit einem Eigenfahrzeugdatenbusblock.

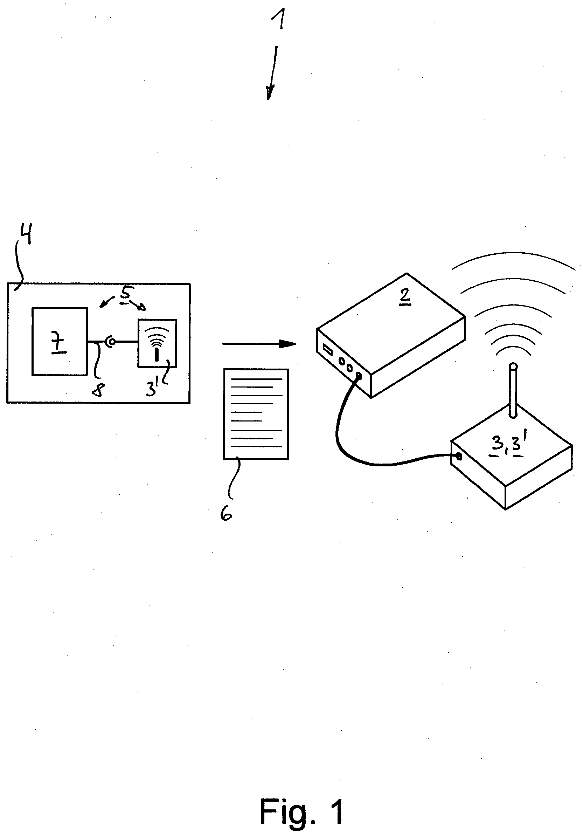

In Fig. 1 ist schematisch zunächst dargestellt der Ablauf des vorgeschlagenen computerimplementierten Verfahrens 1 zur Implementierung einer Car2x-Anwendung auf einer Zielhardware 2 mit einem Funkadapter 3, wobei die Car2x-Anwendung mit einer graphischen Modellierungsumgebung 4 in Form eines Blockschaltbildes 5 modelliert wird. Das Blockschaltbild 5 und die mit ihm modellierte Car2x-Anwendung werden zunächst in ein auf der Zielhardware 2 ausführbares Car2x-Programm 6 übersetzt und das Car2x-Programm 6 wird dann auf die Zielhardware 2 übertragen und dort ausgeführt.

Dies geschieht insgesamt über hier im Einzelnen nicht dargestellte Zwischenstufen: das Blockschaltbild 5 wird analysiert und zunächst im Programmcode übersetzt, wobei der Programmcode dann kompiliert wird, so dass das ausführbare Car2x-Programm 6 resultiert. Das auf der Zielhardware 2 ausgeführte Car2x-Programm implementiert damit die zuvor mit Hilfe der graphischen Modellierungsumgebung 4 in Form des Blockschaltbildes 5 modellierte Funktionalität der Car2x-Anwendung.

Der Funkadapter 3 ist in dem eigenen Fahrzeug installiert und stellt das technische Medium dar, mit dem entweder mit anderen Fahrzeugen kommuniziert wird (Car2Car) oder mit anderen, festen Kommunikationspartnern kommuniziert wird (Car2Infrastructure) wie z.B. Lichtzeichen, Staumeldestationen usw.

Während das eigene Fahrzeug sich durch den Verkehr bewegt, baut es mit dem in Funkreichweite befindlichen anderen Kommunikationspartnern ein adhoc-Netzwerk auf, das naturgemäß aufgrund der ständig wechselnden Kommunikationspartner hochgradig veränderlich ist.

Die Implementierung einer Car2x-Anwendung auf der Zielhardware 2 wird durch den Einsatz eines Car2x-Kommunikationsblocks 7 erleichtert, mit dem das Blockschaltbild 5 - zumindest teilweise - erstellt wird. Der Car2x-Kommunikationsblock 7 enthält eine elementare Kommunikationsfunktionalität, die in dem Blockschaltbild 5 über eine Funkadapterschnittstelle 8 nutzbar ist. Über die Funkadapterschnittstelle 8 können Daten zwischen dem Funkadapter 3 bzw. der modellseitigen Entsprechung 3' des Funkadapters 3 in der graphischen Modellierungsumgebung 4 und dem Car2x-Kommunikationsblock 7 ausgetauscht werden. Dadurch, dass der Car2x-Kommunikationsblock 7 die erforderliche Funktionalität zum Austausch von Daten mit dem Funkädapter 3, 3' mitbringt, ist es nicht mehr erforderlich, diese Funktionalität im Einzelnen mit Elementaroperationen der Modellierungsumgebung 4 zu modellieren.

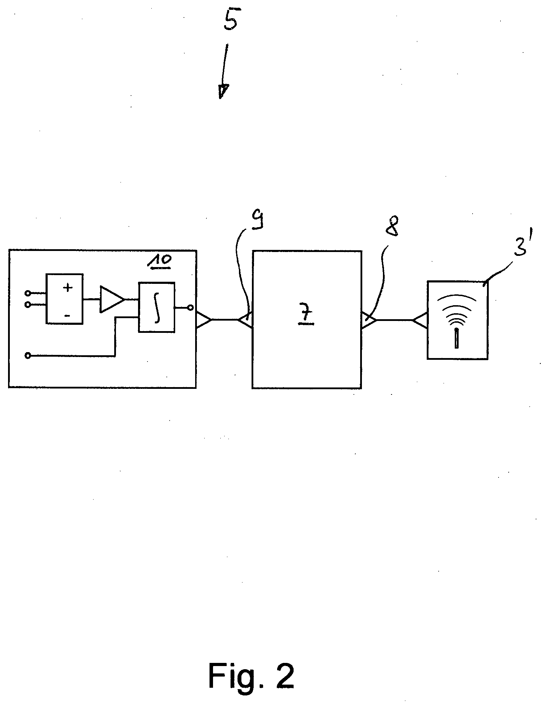

In den Fig. 2 bis 5 ist jeweils ein Blockschaltbild 5 dargestellt, mit dem eine Car2x-Anwendung modelliert ist, wobei die graphische Modellierungsumgebung nicht mehr ausdrücklich dargestellt ist. In allen Bildern ist ersichtlich, dass der Car2x-Kommunikationsblock 7 der Implementierung einer Car2x-Anwendung in einer graphischen Modellierungsumgebung in Form eines Blockschaltbildes 5 dient, wobei der Car2x-Kommunikationsblock 7 eine Funkadapterschnittstelle 8 aufweist, mittels derer Daten zwischen dem Car2x-Kommunikationsblock 7 und dem modellierten Funkadapter 3' des Blockschaltbildes 5 austauschbar sind.

In Fig. 2 ist erkennbar, dass der Car2x-Kommunikationsblock 7 eine Applikationsschnittstelle 9 aufweist, mittels derer mit einer Applikationseinheit 10 Daten austauschbar sind, wobei die Applikationseinheit 10 hier Teil des Blockschaltbildes 5 ist. Die Applikationseinheit 10 beherbergt die individuelle Funktionalität der zu implementierenden Car2x-Anwendung. Durch den Car2x-Kommunikationsblock 7 ist es auf einfache Weise möglich, die für Car2x-Anwendungen typische Kommunikationen mit anderen Kommunikationspartnern zu errichten.

In den dargestellten Ausführungsbeispielen sind sämtliche Schnittstellen als Ports von Blöcken dargestellt, so dass alleine aus den Signallinien-Verbindungen ersichtlich ist, welcher Block mit welchem anderen Block kommuniziert. Über eine Signallinie kann nicht notwendigerweise nur ein einziges Signal übermittelt werden, es ist beispielsweise auch möglich, eine Vielzahl an Signalen über eine Signallinie zu transportieren, dies ist bei aktuellen Modellierungswerkzeugen lediglich eine Frage der Darstellung.

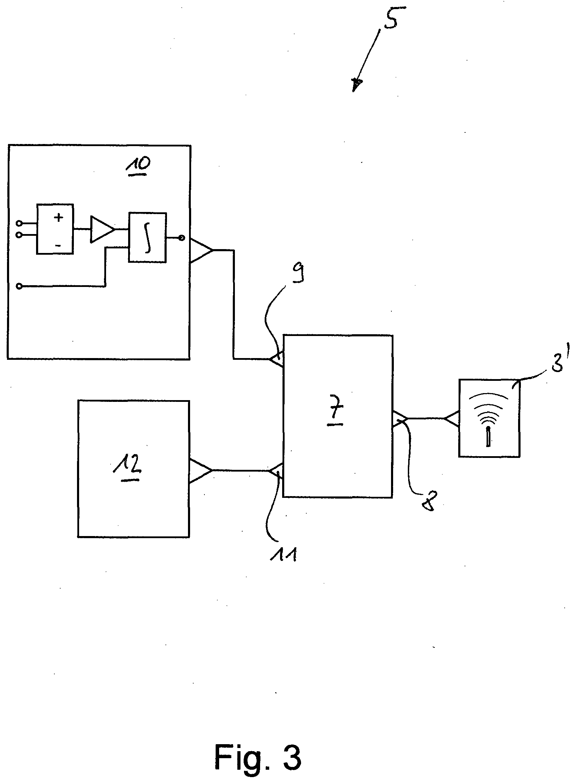

Fig. 3 zeigt eine Car2x-Anwendung, bei der der Car2x-Kommunikationsblock 7 eine Senderatenschnittstelle 11 aufweist, über die dem Car2x-Kommunikationsblock 7 die Rate vorgebbar ist, mit der der Car2x-Kommunikationsblock 7 dem Funkadapter 3' Daten übermittelt. Nach Übertragung des Blockschaltbildes 5 in das ausführbare Car2x-Programm 6 bedeutet dies natürlich, dass die dann auf der Zielhardware 2 implementierte entsprechende Funktionalität des Car2x-Kommunikationsblocks 7 dafür sorgt, dass die Zielhardware 2 über den Funkadapter 3 nur in der vorgegebenen Rate Daten übermittelt und dieser in der vorgegebenen Rate auch nur Daten sendet; es ist stets - soweit wie möglich - eine exakte Entsprechung zwischen Blockschaltbild und Zielhardware vorhanden.

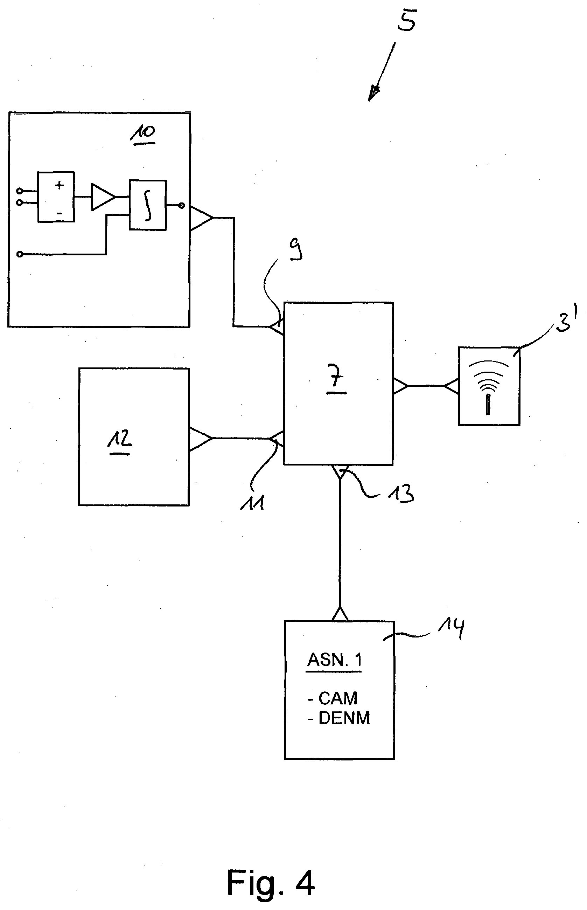

In den Fig. 3 und 4 ist dargestellt, dass dem Car2x-Kommunikationsblock 7 eine Senderate über die Senderatenschnittstelle 11 vorgegeben wird, die aus einem DCC-Block 12 (Decentralized Congestion Control) stammt, wobei dieser DCC-Block 12 beispielsweise von dem Funkadapter 3, 3' Informationen über die Kanalauslastung erhält und so für eine entsprechende angepasste Senderate sorgt.

In Fig. 4 ist der Car2x-Kommunikationsblock 7 mit einer erweiterten Funktionalität dargestellt, denn er weist eine Protokollschnittstelle 13 auf, über die dem Car2x-Kommunikationsblock 7 Protokollbeschreibungsdaten 14 übermittelbar sind. Die Protokollbeschreibungsdaten 14 liegen hier im ASN.1-Format (Abstract Syntax Notation One) vor. Mittels der Protokollbeschreibungsdaten 14 wird die Kommunikationsfunktionalität des Car2x-Kommunikationsblocks 7 zumindest teilweise definiert. Durch die Definition der Kommunikationsfunktionalität des Car2x-Kommunikationsblocks 7 wird letztlich auch die Kommunikationsfunktionalität der später auf der Zielhardware implementierten Car2x-Anwendung bestimmt.

In den dargestellten Ausführungsbeispielen ist die Kommunikation zwischen dem Car2x-Kommunikationsblock 7 und dem Funkadapter 3 bzw. dem Modell des Funkadapters 3' über das Netzwerkprotokoll UDP realisiert. Entsprechend ist die in Fig. 1 dargestellte Verbindung zwischen der Zielhardware 2 und dem Funkadapter 3 eine Ethernet basierte Verbindung, die über das Netzwerkprotokoll UDP realisiert ist.

Die in Fig. 4 dargestellten Protokollbeschreibungsdaten 14 enthalten hier eine Beschreibung von Cooperative Awareness Messages (CAM), die zyklisch über die Funkadapterschnittstelle 8 versendet werden, und auch eine Beschreibung von Decentralized Environmental Notification Messages (DENM), die von dem Car2x-Kommunikationsblock 7 verwendet wird, um ereignisgetrieben Daten über die Funkadapterschnittstelle 8 zu versenden. Durch die Konfiguration des Car2x-Kommunikationsblocks 7 wird damit ermöglicht, dass über die Funkadapterschnittstelle 8 zyklisch und ereignisgetrieben Daten versendbar sind, nämlich in Form der angesprochenen Formate CAM und DENM.

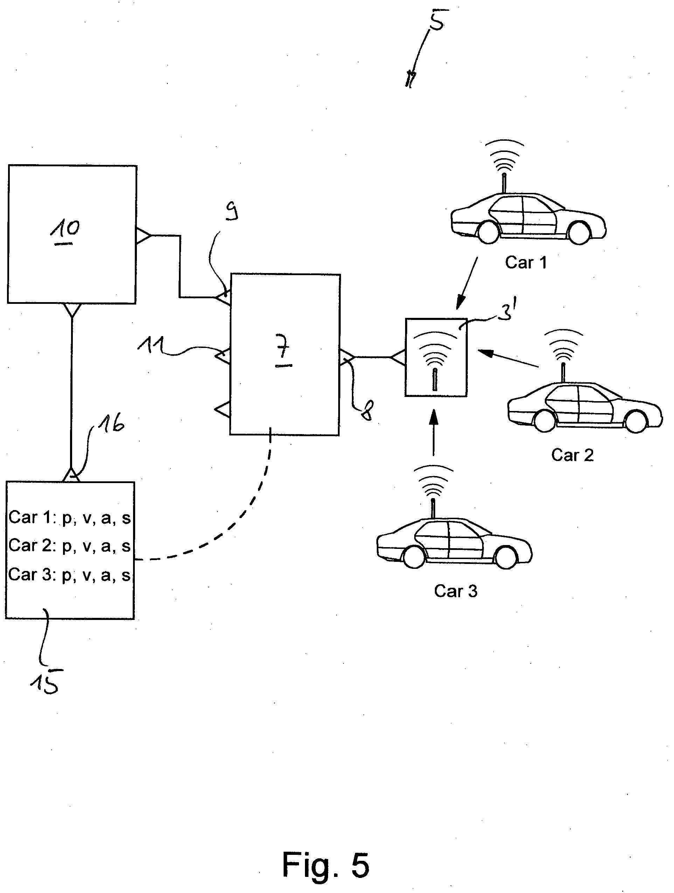

In Fig. 5 ist ein typischer Anwendungsfall dargestellt, in dem mehrere Fremdfahrzeuge, hier mit Car1, Car2 und Car3 bezeichnet, sich in Empfangsreichweite des Funkadapters 3 bzw. des Modells des Funkadapters 3' befinden und insoweit der Funkadapter 3, 3' Daten von den Fremdfahrzeugen Car1, Car2 und Car3 empfängt. Das Blockschaltbild 5 weist einen Car2x-Bewegungsprofilblock 15 auf, der ebenfalls zur Implementierung einer Car2x-Anwendung im Blockschaltbild 5 dient, wobei der Car2x-Bewegungsprofilblock 15 eine Bewegungsdatenschnittstelle 16 aufweist, mittels derer Bewegungsdaten p, v, a aus empfangenen Daten von Fremdfahrzeugen Car1, Car2, Car3 bereitstellbar sind. Es ist zu erkennen, dass diese Bewegungsdaten der Fremdfahrzeuge Car1, Car2 und Car3 in dem Car2x-Bewegungsprofilblock 15 abgelegt sind und über diesen Car2x-Bewegungsprofilblock 15 anderen Teilen des Blockschaltbildes 5 verfügbar gemacht werden.

Im dargestellten Beispiel ist der Car2x-Bewegungsprofilblock 15 mit der Applikationseinheit 10 verbunden. Die gestrichelte Verbindung zwischen dem Car2x-Bewegungsprofilblock 15 und dem Car2x-Kommunikationsblock 7 deutet an, dass in dem dargestellten Ausführungsbeispiel der Car2x-Kommunikationsblock 7 ebenfalls Zugriff auf die Bewegungsdaten p, v, a hat, auch ohne dass dies hier mit einer Signallinienverbindung deutlich gemacht ist. Die Bewegungsdaten umfassen hier die Position p, die Geschwindigkeit v und die Beschleunigung a des jeweiligen Fremdfahrzeugs Car1, Car2 und Car3. In dem Car2x-Bewegungsprofilblock 15 können auch andere Daten von Fremdfahrzeugen Car1, Car2 und Car3 abgelegt werden, hier ist das die Statusinformation s, in der codiert abgelegt sein kann, ob es sich bei dem Fremdfahrzeug um ein Einsatzfahrzeug handelt, ob das Einsatzfahrzeug im Notfalleinsatz befindlich ist etc. Zu den Bewegungsdaten kann auch die Bewegungsrichtung zählen, die beispielsweise aus einer vektoriellen Geschwindigkeitsinformation extrahierbar ist.

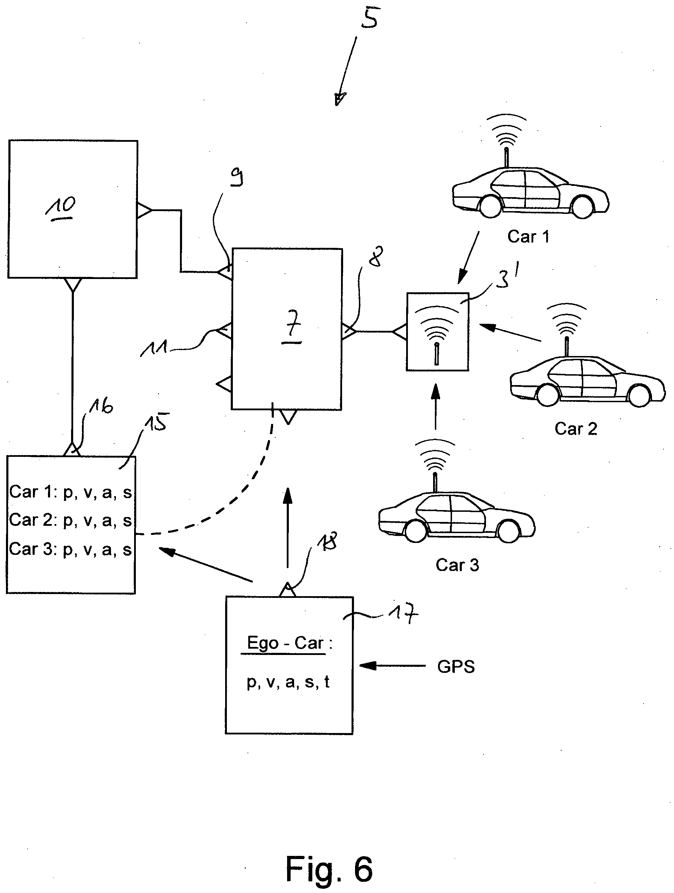

In Fig. 6 ist eine modellierte und zu implementierende Car2x-Anwendung gezeigt, bei der ein Car2x-Eigenbewegungsprofilblock 17 vorgesehen ist, wobei der Car2x-Eigenbewegungsprofilblock eine Bewegungsdatenschnittstelle 18 aufweist, mittels derer Bewegungsdaten des eigenen Fahrzeugs - hier nicht dargestellt - bereitstellbar sind, wobei die Bewegungsdaten im vorliegenden Fall die Position p, die Geschwindigkeit v, die Beschleunigung a und die daraus ermittelte Bewegungsrichtung umfassen. Genau wie im Fall des Car2x-Bewegungsprofilblocks 15 kann auch der Car2x-Eigenbewegungsprofilblock 17 weitere Daten umfassen, wie beispielsweise eine Statusinformation s und die Zeit t. Die Informationen können beispielsweise aus einem GPS-Empfänger des Eigenfahrzeugs stammen. Die Bewegungsdaten des eigenen Fahrzeugs können so der Car2x-Anwendung innerhalb des Blockschaltbilds 5 und damit natürlich auch in der übertragenen Car2x-Anwendung auf der Zielhardware 2 verfügbar gemacht werden.

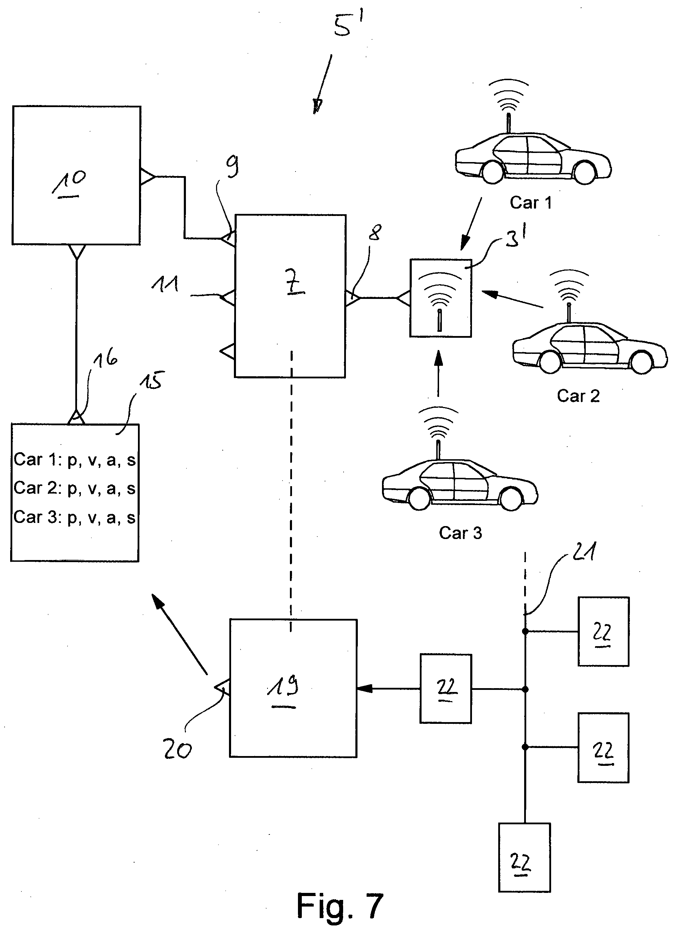

Fig. 7 zeigt die Verwendung eines Car2x-Eigenfahrzeugdatenbusblocks 19 in dem Blockschaltbild 5, wobei der Car2x-Eigenfahrzeugdatenbusblock 19 wenigstens eine Datenbusdatenschnittstelle 20 aufweist, mittels derer Daten des Datenbusses 21 des eigenen Fahrzeugs bereitstellbar sind. Die Daten können speziell dem Car2x-Kommunikationsblock 7 bereitgestellt werden, die Daten können aber auch anderen Teilen des Blockschaltbildes zur Verfügung gestellt werden. Entsprechend gilt, dass bei Übertragung des Blockschaltbildes 5 in ein Car2x-Programm 6 und bei Ausführung dieses Car2x-Programms 6 auf der Zielhardware 2 mittels der übertragenen Funktionalität des Car2x-Eigenfahrzeugdatenbusblocks 19 ein Zugriff auf die Daten des Datenbusses 21 des realen Fahrzeugs möglich ist. Diese Daten können dann im Rahmen der Car2x-Anwendung ebenfalls verwendet werden. Bei dem Datenbus 21 handelt es sich um einen Datenbus, der der Vernetzung der Fahrzeugsteuergeräte 22 dient. Im dargestellten Ausführungsbeispiel handelt es sich bei dem Datenbus 21 um einen CAN-Bus.

## Patentansprüche

1. Computerimplementiertes Verfahren (1) zur Implementierung einer Car2x-Anwendung auf einer Zielhardware (2) mit einem Funkadapter (3, 3'), wobei die Car2x-Anwendung mit einer graphischen Modellierungsumgebung (4) in Form eines Blockschaltbildes (5) modelliert wird und das Blockschaltbild (5) in ein auf der Zielhardware (2) ausführbares Car2x-Programm (6) übersetzt und das Car2x-Programm (6) auf die Zielhardware (2) übertragen und dort ausgeführt wird, wobei zur Erstellung des Blockschaltbildes (5) ein Car2x-Kommunikationsblock (7) eingesetzt wird, der wenigstens eine Funkadapterschnittstelle (8) aufweist, mittels derer Daten zwischen dem Funkadapter (3, 3') und dem Car2x-Kommunikationsblock (7) ausgetauscht werden.

2. Computerimplementiertes Verfahren (1) nach Anspruch 1, **dadurch gekennzeichnet, dass** der Car2x-Kommunikationsblock (7) über wenigstens eine Applikationsschnittstelle (9) mit einer Applikationseinheit (10) Daten austauscht, insbesondere wobei die Applikationseinheit (10) Teil des Blockschaltbildes (5) ist.

3. Computerimplementiertes Verfahren (1) nach Anspruch 1 oder 2, **dadurch gekennzeichnet, dass** dem Car2x-Kommunikationsblock (7) über wenigstens eine Senderatenschnittstelle (11) die Rate vorgegeben wird, mit der dem Funkadapter (3, 3') Daten übermittelt werden.

4. Computerimplementiertes Verfahren (1) nach einem der Ansprüche 1 bis 3, **dadurch gekennzeichnet, dass** dem Car2x-Kommunikationsblock (7) über wenigstens eine Protokollschnittstelle (13) Protokollbeschreibungsdaten (14) übermittelt werden, insbesondere im Format Abstract Syntax Notation One, wobei mittels der Protokollbeschreibungsdaten (14) die Kommunikationsfunktionalität des Car2x-Kommunikationsblocks (7) zumindest teilweise definiert wird.

5. Computerimplementiertes Verfahren (1) nach einem der Ansprüche 1 bis 4, **dadurch gekennzeichnet, dass** wenigstens eine der Schnittstellen Funkadapterschnittstelle (8), Applikationsschnittstelle (9), Senderatenschnittstelle (11) und Protokollschnittstelle (13) als Port des Car2x-Kommunikationsblocks realisiert ist.

6. Computerimplementiertes Verfahren (1) nach einem der Ansprüche 1 bis 5, **dadurch gekennzeichnet, dass** die Funkadapterschnittstelle (8) des Car2x-Kommunikationsprotokolls auf einer Protokollebene oberhalb der Transportschicht des OSI-Referenzmodells realisiert wird, also in der Sitzungsschicht, der Darstellungsschicht oder der Anwendungsschicht.

7. Computerimplementiertes Verfahren (1) nach einem der Ansprüche 1 bis 6, **dadurch gekennzeichnet, dass** die Kommunikation zwischen dem Car2x-Kommunikationsblock (7) und dem Funkadapter (3, 3') über das Netzwerkprotokoll UDP realisiert wird.

8. Computerimplementiertes Verfahren (1) nach einem der Ansprüche 1 bis 7, **dadurch gekennzeichnet, dass** der Car2x-Kommunikationsblock (7) über die Funkadapterschnittstelle (8) zyklisch Daten versendet, insbesondere in Form von Cooperative Awareness Messages.

9. Computerimplementiertes Verfahren (1) nach einem der Ansprüche 1 bis 8, **dadurch gekennzeichnet, dass** der Car2x-Kommunikationsblock (7) über die Funkadapterschnittstelle (8) ereignisgetrieben Daten versendet, insbesondere in Form von Decentralized Environmental Notification Messages.

10. Computerimplementiertes Verfahren (1) nach einem der Ansprüche 1 bis 9, **dadurch gekennzeichnet, dass** zur Erstellung des Blockschaltbildes (5) ein Car2x-Bewegungsprofilblock (15) eingesetzt wird, der wenigstens eine Bewegungsdatenschnittstelle (16) aufweist, mittels derer Bewegungsdaten (p, v, a) aus empfangenen Daten von Fremdfahrzeugen (Car1, Car2, Car3) bereitgestellt werden, insbesondere wobei zu den Bewegungsdaten (p, v, a) wenigstens eine der Informationen Position (p), Geschwindigkeit (v), Beschleunigung (a) und Bewegungsrichtung gehört.

11. Computerimplementiertes Verfahren (1) nach einem der Ansprüche 1 bis 10, **dadurch gekennzeichnet, dass** zur Erstellung des Blockschaltbildes (5) ein Car2x-Eigenbewegungsprofilblock (17) eingesetzt wird, der wenigstens eine Bewegungsdatenschnittstelle (18) aufweist, mittels derer Bewegungsdaten (p, v, a) des eigenen Fahrzeugs bereitgestellt werden, insbesondere wobei zu den Bewegungsdaten (p, v, a) wenigstens eine der Informationen Position (p), Geschwindigkeit (v), Beschleunigung (a) und Bewegungsrichtung gehört.

12. Computerimplementiertes Verfahren (1) nach einem der Ansprüche 1 bis 11, **dadurch gekennzeichnet, dass** zur Erstellung des Blockschaltbildes (5) ein Car2x-Eigenfahrzeugdatenbusblock (19) eingesetzt wird, der wenigstens eine Datenbusdatenschnittstelle (20) aufweist, mittels derer Daten des Datenbusses (21) des eigenen Fahrzeugs bereitgestellt werden, insbesondere dem Car2x-Kommunikationsblock (7) bereitgestellt werden, wobei es sich bei dem Datenbus (21) insbesondere um einen Datenbus (21) zur Vernetzung der Fahrzeugsteuergeräte (22) handelt, insbesondere wobei der Datenbus (21) nach einem der Standards CAN, TTCAN oder FlexRay arbeitet.

## Claims

1. Computer implemented method (1) for implementing a Car2x application on target hardware (2) having a radio adapter (3, 3'), wherein the Car2x application is modeled with a graphic modeling environment (4) in the form of a block diagram (5) and the block diagram (5) is translated into a Car2x program (6) that can be run on the target hardware (2) and the Car2x program is transferred to the target hardware (2) and is run there, wherein a Car2x communication block (7) is used for creating the block diagram (5), the Car2x communication block (7) having at least one radio adapter interface (8), by means of which data is exchanged between the radio adapter (3, 3') and the Car2x communication block.

2. Computer implemented method (1) according to claim 1, **characterized in that** the Car2x communication block (7) exchanges data with an application unit (10) via at least one application interface (9), in particular wherein the application unit (10) is part of the block diagram (5).

3. Computer implemented method (1) according to claim 1 or 2, **characterized in that** the rate with which the radio adapter (3, 3') exchanges data is provided to the Car2x communication block (7) via at least one transmitting rate interface (11).

4. Computer implemented method (1) according to any one of claims 1 to 3, **characterized in that** the Car2x communication block (7) exchanges protocol description data (14) via at least one protocol interface (13), in particular in the format Abstract Syntax Notation One, wherein the communication functionality of the Car2x communication block (7) is at last partially defined by the protocol description data (14).

5. Computer implemented method (1) according to any one of claims 1 to 4, **characterized in that** at least one of the interfaces among radio adapter interface (8), application interface (9), transmitting rate interface (11) and protocol interface (13) is implemented as a port of the Car2x communication block.

6. Computer implemented method (1) according to any one of claims 1 to 5, **characterized in that** the radio adapter interface (8) of the Car2x communication protocol is implemented on a protocol level above the transport layer of the OSI reference model, i.e. in the session layer, the presentation layer or the application layer.

7. Computer implemented method (1) according to any one of claims 1 to 6, **characterized in that** the communication between the Car2x communication block (7) and the radio adapter (3, 3') is implemented via the network protocol UDP.

8. Computer implemented method (1) according to any one of claims 1 to 7, **characterized in that** the Car2x communication block (7) sends data cyclically via the radio adapter interface (8), in particular in the form of cooperative awareness messages.

9. Computer implemented method (1) according to any one of claims 1 to 8, **characterized in that** the Car2x communication block (7) sends data driven by events, in particular in the form of decentralized environmental notification messages.

10. Computer implemented method (1) according to any one of claims 1 to 9, **characterized in that** a Car2x motion profile block (15) is used for creating the block diagram (5), the Car2x motion profile block (15) having at least one motion data interface (16), by means of which motion data (p, v, a) from data received by other vehicles (Car1, Car2, Car3) is provided, in particular wherein at least one piece of information among position (p), speed (v), acceleration (a) and direction of motion belongs to the motion data (p, v, a).

11. Computer implemented method (1) according to any one of claims 1 to 10, **characterized in that** a Car2x egomotion profile block (17) is used for creating the block diagram (5), the Car2x egomotion profile block (17) having at least one motion data interface (18), by means of which motion data (p, v, a) of one's own vehicle is provided, in particular wherein at least one piece of information among position (p), speed (v), acceleration (a) and direction of motion belongs to the motion data (p, v, a).

12. Computer implemented method (1) according to any one of claims 1 to 11, **characterized in that** a Car2x own vehicle data bus block (19) is used for creating the block diagram (5), the Car2x own vehicle data bus block (19) having at least one data bus data interface (20), by means of which data of the data bus (21) of one's own vehicle is provided, in particular is provided to the Car2x communication block (7), wherein the data bus (21) is, in particular, a data bus (21) for networking vehicle control units (22), in particular wherein the data bus (21) operates using one of the standards CAN, TTCAN, or FlexRay.

## Revendications

1. Procédé mis en oeuvre sur ordinateur (1), destiné à mettre en oeuvre une application Car2x sur un matériel cible (2) comportant un adaptateur radio (3, 3'), dans lequel l'application Car2x est modélisée sous la forme d'un schéma fonctionnel (5) dans un environnement de modélisation graphique (4) et le schéma fonctionnel (5) est converti en un programme Car2x (6) exécutable sur le matériel cible (2) et le programme Car2x (6) est transféré sur le matériel cible (2) et y est exécuté, dans lequel un bloc de communication Car2x (7) est utilisé pour créer le schéma fonctionnel (5), lequel bloc de communication comprend au moins une interface d'adaptateur radio (8) au moyen de laquelle des données sont échangées entre l'adaptateur radio (3, 3') et le bloc de communication Car2x (7).

2. Procédé mis en oeuvre sur ordinateur (1) selon la revendication 1, **caractérisé en ce que** le bloc de communication Car2x (7) échange des données avec une unité d'application (10) par l'intermédiaire d'au moins une interface d'application (9) et plus particulièrement, dans lequel l'unité d'application (10) fait partie du schéma fonctionnel (5).

3. Procédé mis en oeuvre sur ordinateur (1) selon la revendication 1 ou 2, **caractérisé en ce que** le débit avec lequel des données sont transmises à l'adaptateur radio (3, 3') est fourni à l'avance au bloc de communication Car2x (7) par l'intermédiaire d'au moins une interface de débits d'émission (11).

4. Procédé mis en oeuvre sur ordinateur (1) selon l'une quelconque des revendications 1 à 3, **caractérisé en ce que** des données de description de protocole (14) sont transmises au bloc de communication Car2x (7) par l'intermédiaire d'au moins une interface de protocole (13), notamment selon le format Abstract Syntax Notation One, dans lequel la fonctionnalité de communication du bloc de communication Car2x (7) est définie au moins partiellement au moyen des données de description de protocole (14).

5. Procédé mis en oeuvre sur ordinateur (1) selon l'une quelconque des revendications 1 à 4, **caractérisé en ce qu'**au moins l'une des interfaces, à savoir l'interface d'adaptateur radio (8), l'interface d'application (9), l'interface de débits d'émission (11) et l'interface de protocole (13), est réalisée sous la forme d'un port du bloc de communication Car2x.

6. Procédé mis en oeuvre sur ordinateur (1) selon l'une quelconque des revendications 1 a 5, **caractérisé en ce que** l'interface d'adaptateur radio (8) du protocole de communication Car2x est réalisée sur un plan de protocole situé au-dessus de la couche de transport du modèle de référence OSI et par conséquent, dans la couche de session, la couche de présentation ou la couche d'application.

7. Procédé mis en oeuvre sur ordinateur (1) selon l'une quelconque des revendications 1 à 6, **caractérisé en ce que** la communication entre le bloc de communication Car2x (7) et l'adaptateur radio (3, 3') est réalisée par l'intermédiaire du protocole de réseau UDP.

8. Procédé mis en oeuvre sur ordinateur (1) selon l'une quelconque des revendications 1 à 7, **caractérisé en ce que** le bloc de communication Car2x (7) envoie cycliquement des données par l'intermédiaire de l'interface d'adaptateur radio (8), notamment sous la forme de messages de type Cooperative Awareness.

9. Procédé mis en oeuvre sur ordinateur (1) selon l'une quelconque des revendications 1 à 8, **caractérisé en ce que** le bloc de communication Car2x (7) envoie des données pilotées par événements par l'intermédiaire de l'interface d'adaptateur radio (8), notamment sous la forme de messages de type Decentralized Environmental Notification.

10. Procédé mis en oeuvre sur ordinateur (1) selon l'une quelconque des revendications 1 à 9, **caractérisé en ce qu'**un bloc de profil de déplacement Car2x (15) est utilisé pour créer l'organigramme (5), lequel bloc de profil de déplacement comprend au moins une interface de données de déplacement (16) au moyen de laquelle des données de déplacement (p, v, a) sont fournies à partir de données reçues de véhicules tiers (Car1, Car2, Car3) et plus particulièrement, dans lequel au moins l'une des informations suivantes : position (p), vitesse (v), accélération (a) et direction de déplacement, appartient aux données de déplacement (p, v, a).

11. Procédé mis en oeuvre sur ordinateur (1) selon l'une quelconque des revendications 1 à 10, **caractérisé en ce qu'**un bloc de profil de déplacement Car2x (17) est utilisé pour créer l'organigramme (5), lequel bloc de profil de déplacement comprend au moins une interface de données de déplacement (18) au moyen de laquelle des données de déplacement (p, v, a) du véhicule propre sont fournies et plus particulièrement, dans lequel au moins l'une des informations suivantes : position (p), vitesse (v), accélération (a) et direction de déplacement, appartient aux données de déplacement (p, v, a).

12. Procédé mis en oeuvre sur ordinateur (1) selon l'une quelconque des revendications 1 à 11, **caractérisé en ce qu'**un bloc de données de véhicule propre Car2x (19) est utilisé pour créer l'organigramme (5), lequel bloc de données de véhicule propre comprend au moins une interface de données de bus de données (20) au moyen de laquelle des données de bus de données (21) du véhicule propre sont fournies au bloc de communication (7) et plus particulièrement, dans lequel le bus de données (21) est notamment un bus de données (21) destiné à la mise en réseau des appareils de commande de véhicules (22) et plus particulièrement, dans lequel le bus de données (21) fonctionne conformément à la norme CAN, TTCAN ou FlexRay.
